# EUROPEAN PATENT APPLICATION

(11) **EP 4 546 112 A1**
(43) Date of publication of application: **30.04.2025**
(21) Application number: 24208131.3
(22) Date of filing: 22.10.2024
(51) Int. Cl.: G06F 3/16, B64D 11/00, G02B 27/01, G06F 3/01

(54) **INTERACTIVE DIGITAL ASSISTANT FOR AIRCRAFT CABIN APPLICATIONS**

(30) Priority: 23.10.2023 IN 202341072242; 21.08.2024 US 202418811206
(71) Applicant: Goodrich Corporation, Charlotte, NC 28217-4578 (US)
(72) Inventor: SANGA, Srinivas, Bangalore 560036 (IN); SAHAY, Gaurav, Bangalore 560105 (IN)
(74) Representative: Dehns

(57) **Abstract**

Systems and methods for implementing an interactive digital assistant (200) in an aircraft cabin (100) environment. In embodiments, the system includes a holographic display subsystem (112) including a hologram generator configured to display a hologram in the aircraft cabin, a sensor subassembly (110) for determining positional information of a receiver of information in the aircraft cabin, and a controller configured to determine, based on an output from the sensor subassembly, a position of the receiver or information in order to operate the hologram generator to project the hologram to communicate information to the receiver of information based on the determined positional information. In some embodiments, the hologram is interactive, configured to communicate information, demonstrate use of the equipment, and communicate with other systems to control equipment.

## Description

### TECHNICAL FIELD AND BACKGROUND

The present disclosure relates generally to an interactive assistant, and more particularly, to an interactive digital assistant implemented as a hologram projected in an aircraft cabin environment configured to interact with and communicate information to a receiver of information for the purpose of educating the receiver regarding their surroundings, inform the receiver about the existence and usage of equipment, and execute commands to operate the equipment, among other features and functionalities.

Environments such as aircraft cabins in private and business jets can be complex and difficult to navigate for some users. In addition, some aircraft cabins may include state-of-the-art equipment not readily apparent to a user. Even after a user is made aware of the existence of equipment, most equipment control is performed through a dedicated control panel or separate smart device that requires the user to navigate menus to reach selections. In some cases, a user may become frustrated and seek assistance from the flight crew to understand, control, and make full use of their surroundings.

Therefore, what is needed is an intuitive solution for interacting with a user to better utilize their surroundings to enhance overall customer experience.

### BRIEF SUMMARY

According to one aspect, the present disclosure is directed to a system for communicating information to a receiver of information in an aircraft, for instance a passenger in an aircraft cabin. In embodiments, the system includes a hologram generator configured to project a hologram in a zone of an aircraft cabin, a sensor subassembly configured to sense a position of a receiver of information in the zone, and a controller including a processor. In embodiments, the processor is configured to receive, from the sensor subassembly, positional information pertaining to the receiver of information, determine, based on the received positional information, a position of the receiver of information within the zone, and operate, based on the determined position of the receiver of information within the zone, the hologram generator to communicate information, by the hologram, to the receiver of information pertaining to the determined position of the receiver of information within the zone.

In at least some embodiments, the zone includes equipment usable by the receiver of information, the determined position of the receiver of information is with respect to the equipment, and the information communicated to the receiver of information, by the hologram, includes instructional information pertaining to use of the equipment.

In at least some embodiments, the controller is operably coupled to the equipment, and the processor is further configured to receive, from the receiver of information, a verbal command pertaining to an operation of the equipment, process the received verbal command, and operate the equipment to execute the processed verbal command.

In at least some embodiments, the equipment includes emergency equipment, and the information communicated to the receiver of information pertaining to the use of the equipment includes a tutorial, by the hologram, demonstrating use of the emergency equipment.

In at least some embodiments, the information communicated to the receiver of information, by the hologram, includes information pertaining to an existence of the equipment and physical location of the equipment within the zone.

In at least some embodiments, the equipment includes at least one of an adjustable passenger seat, media equipment, lighting equipment, climatization equipment, and privacy equipment.

In at least some embodiments, the processor is further configured to, based on the determined position of the receiver of information in the zone, provide a tutorial of the equipment available for use in the zone.

In at least some embodiments, the system further includes at least one additional hologram generator configured to project a hologram in at least one additional zone of the aircraft cabin, the sensor subassembly is configured to sense a position of the receiver of information in the at least one additional zone, and the processor is further configured to determine, based on the received positional information, the position of the receiver of information in the at least one additional zone, and operate, based on the determined position of the receiver of information in the at least one additional zone, the at least one additional hologram generator to communicate information, by the hologram, to the receiver of information pertaining to the determined position of the receiver of information in the at least one additional zone.

In at least some embodiments, the zone includes a passenger seating area and the at least one additional zone includes at least one of a galley, a lavatory, and a bedroom.

In at least some embodiments, the at least one additional zone includes equipment usable by the receiver of information, and the information communicated to the receiver of information, by the hologram generated by the at least additional hologram generator, includes instructional information pertaining to use of the equipment in the at least one additional zone.

In at least some embodiments, the controller is operably coupled to the equipment in the at least one additional zone, and the processor is further configured to receive, from the receiver of information, a verbal command pertaining to an operation of the equipment in the at least one additional zone, process the received verbal command, and operate the equipment to execute the processed verbal command.

In at least some embodiments, the information communicated to the receiver of information, by the hologram, further includes information pertaining to an existence of the equipment and physical location of the equipment in the at least one additional zone.

In at least some embodiments, the equipment includes at least one of furniture, appliances, media equipment, lighting equipment, climatization equipment, and privacy equipment.

In at least some embodiments, the processor is further configured to, based on the determined position of the receiver of information in the at least one additional zone, provide a tutorial of the equipment available for use in the at least one additional zone.

According to another aspect, the present disclosure is directed to a method for communicating with a receiver of information in an aircraft cabin, the aircraft cabin including a hologram generator, a sensor subassembly, and a controller including a processor. The method includes receiving, by the controller, an output from the sensor subassembly pertaining to a position of the receiver of information in a zone of the aircraft cabin, determining, based on the received positional information, a position of the receiver of information within the zone and with respect to equipment within the zone, and operating, based on the determined position of the receiver of information within the zone and with respect to the equipment within the zone, the hologram generator to communicate information, by the hologram, to the receiver of information pertaining to the equipment within the zone.

In at least some embodiments, the equipment within the zone is usable by the receiver of information, and the information communicated to the receiver of information, by the hologram, includes instructional information pertaining to use of the equipment.

In at least some embodiments, the equipment comprises emergency equipment, and the information communicated to the receiver of information pertaining to the use of the equipment includes a tutorial, by the hologram, demonstrating use of the equipment.

In at least some embodiments, the controller is operably coupled to the equipment, and the method further includes receiving, by the controller, a verbal command from the receiver of information pertaining to an operation of the equipment, processing the received verbal command, and operating the equipment to execute the processed verbal command.

In at least some embodiments, the information communicated to the receiver of information, by the hologram, further includes information pertaining to an existence of the equipment and physical location of the equipment within the zone.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 illustrates a non-limiting example of a business or private jet cabin in which a system and method for communicating with a receiver of information may be implemented, in accordance with example embodiments of this disclosure;
FIG. 2 is a block diagram illustrating the general functional components of a system for communicating with a receiver of information in an aircraft cabin, in accordance with example embodiments of this disclosure;
FIG. 3 is a flow diagram illustrating a method for communicating with a receiver of information in an aircraft cabin, in accordance with example embodiments of this disclosure; and
FIG. 4 is a sequence diagram illustrating operational modes of a system for communicating with a receiver of information in an aircraft cabin, in accordance with example embodiments of this disclosure.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to systems and methods for interacting with a receiver of information in an aircraft cabin environment. In some embodiments, the receiver of information may be a passenger or crew member, and the aircraft cabin environment may be a passenger cabin in a business or private jet. In some embodiments, the aircraft cabin may be subdivided into a plurality of zones, not necessarily physically separated, wherein each zone is dedicated for a different purpose, for instance passenger seating, food preparation, meeting space, sleeping, lavatory, etc. In embodiments, each zone may include equipment specific to that zone, and each zone may be equipped with a subsystem for interacting with the receiver to educate the receiver regarding their surroundings, existence of equipment available for use, tutorial on equipment use, control of the equipment, etc.

Some advantages of the systems and methods according to the present disclosure include, but are not limited to, a more convenient, useful, and intuitive way to communicate with a receiver of information, usage of positional information to trigger the dissemination of information, tutorials including equipment usage demonstrations, reducing demands on the cabin crew, preempting passenger needs, etc.

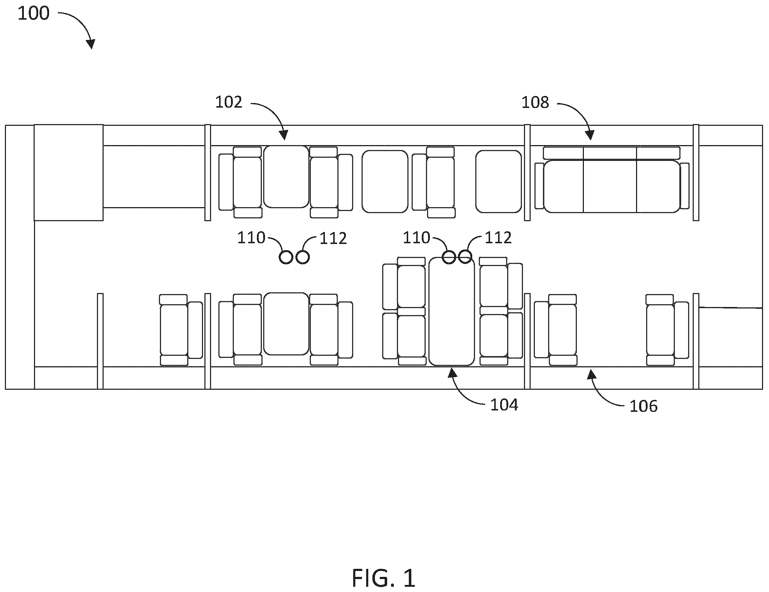

FIG. 1 illustrates a non-limiting example of an aircraft cabin 100 that may be found in a business or private jet, and in which the systems and methods according to the present disclosure may be implemented. As shown, the cabin 100 includes a plurality of separate spaces, referred to herein as 'zones,' wherein each zone may serve a different purpose. For example, a first zone 102 illustrates a conferencing space, a second zone 104 illustrates a dining space, a third zone 106 illustrates a lounge space, and a fourth zone 108 illustrates a sleeping space. Additional zones may include, but are not limited to, a galley for preparing food and beverages, a lavatory, laundry facilities, etc.

Each zone includes different equipment for use by passengers and/or crew. For example, the first zone 102 may include adjustable furniture, conferencing electronics, computer equipment, etc., the second zone 104 may include adjustable seats, media equipment, electronic menu, etc., the third zone 106 may include adjustable seats, media equipment, etc., and the fourth zone 108 may include an adjustable bed, divan, etc. In embodiments, similar equipment may be provided in each of the zones, for instance lighting equipment, window shades, climatization equipment, privacy equipment, etc. In embodiments, at least some of the equipment found in the zones is electronically controlled.

As discussed in detail below, one component of the system is operable for sensing a presence and/or position of a receiver of information (e.g., a passenger) within the aircraft cabin 100, and in some embodiments within a particular zone, while another component of the system is operable for displaying a hologram based on the sensed presence and/or position of the receiver of information. In embodiments, the system operates to determine the presence of a passenger in a zone, and in response, activates the hologram display in that particular zone to interact with the passenger. The interaction may include, for example, a pointing to the equipment available for use in that zone, a tutorial regarding the use of the equipment (e.g., emergency equipment) in that particular zone, configuring user preferences, a demonstration of use of the equipment, availability to answer questions from the user, and receipt and processing of verbal commands to control the equipment. In addition, the interactive assistant may be available to provide general knowledge, information pertaining to the flight and/or destination, calendaring functions, and any other functionality of a digital assistant. In some embodiments, information obtained from the user and/or environment may be utilized by the system to predict future needs or desires of the user, and the assistant may be configured to ask questions tailored to the same.

With continued reference to FIG. 1, the system component operable for sensing a presence and/or position of a receiver of information within the aircraft cabin or particular zone is implemented as at least one sensor located in the cabin environment. Sensor types include, but are not limited to, vision sensors, proximity sensors, weight sensors, etc. In some embodiments, the sensors may be configured to detect object movement without discerning features thereby maintaining privacy. For example, a sensor subassembly including at least one vision sensor 110 may be positioned overhead in the aircraft cabin 100 with a field of view configured to capture at least a portion of the first zone 102, while a separate at least one vision sensor 110 may be positioned overhead in the aircraft cabin 100 with a field of view configured to capture at least a portion of the second zone 104, and so on. Sensor fields of vision may overlap to ensure complete coverage of the cabin environment. In another example, weight-based sensors may be positioned in seating furniture to determine when a seat is occupied. In yet another example, proximity sensors may be used in connection with equipment, for instance appliances, to determine when a receiver of information may be intending to use that piece of equipment.

The system component operable for projecting the digital assistant in the form of a hologram in the aircraft cabin or particular zone may be implemented as a holographic display subsystem including at least one hologram generator. For example, at least one holographic display subsystem 112 may be associated with the first zone 102, while a separate holographic display subsystem 112 may be associated with the second zone 104, and so on. In some embodiments, the at least one sensor and holographic display subsystem assigned to the same zone may be collocated. In embodiments, the hologram may be displayed in a predefined area within the zone visible to the receiver of information and proximal to equipment pertaining to the information conveyed by the digital assistant. In embodiments, upon receiving an output from the at least one sensor, the system may utilize the output information to trigger activation of the hologram portion of the system to cause the holographic assistant to be displayed in that particular zone and with regard to the equipment in the zone, general information, etc. The digital assistant may be displayed in the environment and/or on a device.

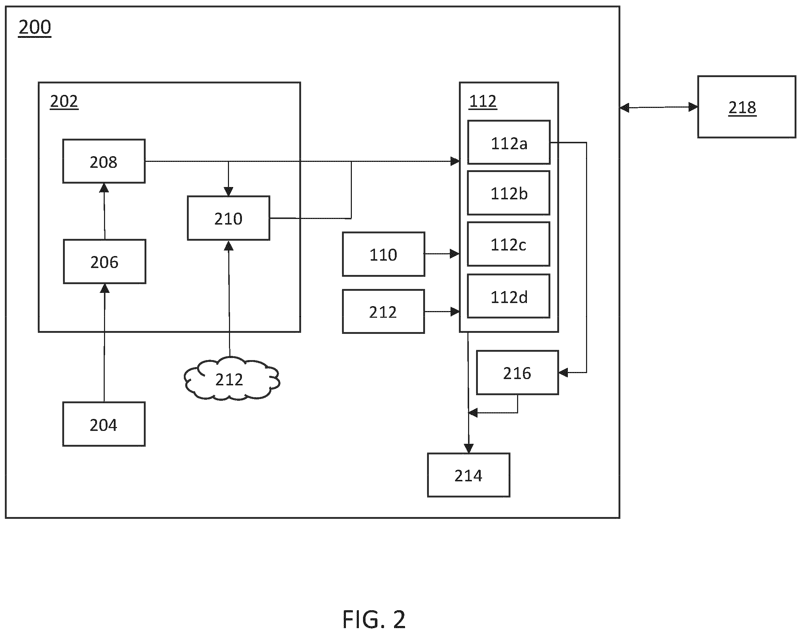

FIG. 2 illustrates the general functional components of the digital assistant system 200 configured to be implemented in an environment such as an aircraft cabin. In embodiments, the digital assistant may be activated by one or more of voice commands, speech-to-text processing, text input, proximity to an area or piece of equipment, during a phase of the flight, when a predefined condition is met, etc. In one aspect, user commands in the form of voice commands 204 are received by a receiver 206 of a command reception module 202. Each receiver 206 may include a microphone installed in the cabin, embedded in a seat, etc. The command reception module 202 further includes a language module 208 communicatively coupled to the receiver 206. In use, the language module 208 may be configured to process asked questions and commands by converting speech to machine-readable text, and processing the text to provide a response, activate an electronic equipment, etc. In embodiments, text processing software may be programmed according to the cabin equipment, historical interactions with the receiver of information, arrival destination, etc., and may be configured to compile a database based on frequently asked questions, user preferences, historical data, etc.

Determined questions, commands, etc. are processed and responded to by a response module 210 of the command reception module 202. Responses may depend on whether the question pertains to the aircraft environment, destination, etc. For example, the response module 210 may be communicatively coupled to a network 212 to provide information and recommendations about the destination city. In a particular example, the response module 210 may be configured to generate suggestions based on online reviews obtained from the network 212.

In embodiments, the command reception module 202 is communicatively coupled to the holographic display subsystem 112 generally including a command processor 112a, an illuminator 112b, a dynamic scattering mechanism 112c, and a display 112d. The illuminator 112b is configured to receive commands from the command processor 112a, and based on the commands, send optical signals to the dynamic scattering mechanism 112c. The optical signals are later aggregated to form an optical image. The illuminator 112b is further configured to receive outputs from a digital assistant configurator 212 operable for determining the overall appearance of the hologram, for instance customizable for an adult, child, man, woman, etc. Configurations details may include, but are not limited to size, color, appearance, brightness, etc. The dynamic scattering mechanism 112c is configured to scatter and aggregate the optical signals received from the illuminator 112b in order to form the holographic 3D image. The 3D image displayed 214, coupled with audio 216, may be projected into open space in the cabin or zone, proximal to equipment, etc. The location of the image may depend on the location of the user interacting with the digital assistant.

The digital assistant system 200 is communicatively coupled with a cabin management system 218. In embodiments, the cabin management system 218 may be a centralized system configured to manage various cabin functionalities including, but not limited to, cabin lighting, window shades, temperature, water heater indicators, and cabin entertainment (e.g., high-definition video and audio distribution across different displays/monitors). In embodiments, the cabin management system 218 is configured to receive input commands from the interactive digital assistant system 200 to operate various equipment under the control of the cabin management system 218. For example, if the user instructs the digital assistant to activate a reading light, the instruction to activate the reading light is processed by the command reception module 202 and output to the cabin management system 218 having the communication of electrical connection to the reading light.

The interactive digital assistant system 200 and components thereof generally include a controller including at least one processor, memory, and a communication interface. The processor provides processing functionality for at least the controller and can include any number of processors, micro-controllers, circuitry, field programmable gate array (FPGA) or other processing systems, and resident or external memory for storing data, executable code, and other information accessed or generated by the controller. The processor can execute one or more software programs embodied in a non-transitory computer readable medium (e.g., memory) that implement techniques described herein. The processor is not limited by the materials from which it is formed, or the processing mechanisms employed therein and, as such, can be implemented via semiconductor(s) and/or transistors (e.g., using electronic integrated circuit (IC) components), and so forth.

The memory can be an example of tangible, computer-readable storage medium that provides storage functionality to store various data and/or program code associated with operation of the controller/processor, such as software programs and/or code segments, or other data to instruct the processor, and possibly other components of the controller, to perform the functionality described herein. Thus, the memory can store data, such as a program of instructions for operating the controller, including its components (e.g., processor, communication interface, etc.), and so forth. It should be noted that while a single memory is described, a wide variety of types and combinations of memory (e.g., tangible, non-transitory memory) can be employed. The memory can be integral with the processor, can comprise stand-alone memory, or can be a combination of both. Some examples of the memory can include removable and nonremovable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The communication interface can be operatively configured to communicate with components of the controller. For example, the communication interface can be configured to retrieve data from the processor or other components of the system, transmit data for storage in the memory, retrieve data from storage in the memory, and so forth. The communication interface can also be communicatively coupled with the processor to facilitate data transfer between components of the controller and the processor. It should be noted that while the communication interface is described as a component of the controller, one or more components of the communication interface can be implemented as external components communicatively coupled to the controller via a wired and/or wireless connection. The controller can also include and/or connect to one or more input/output (I/O) devices (e.g., human machine interface (HMI) devices) via the communication interface. In embodiments, the communication interface may include a transmitter, receiver, transceiver, physical connection interface, or any combination thereof.

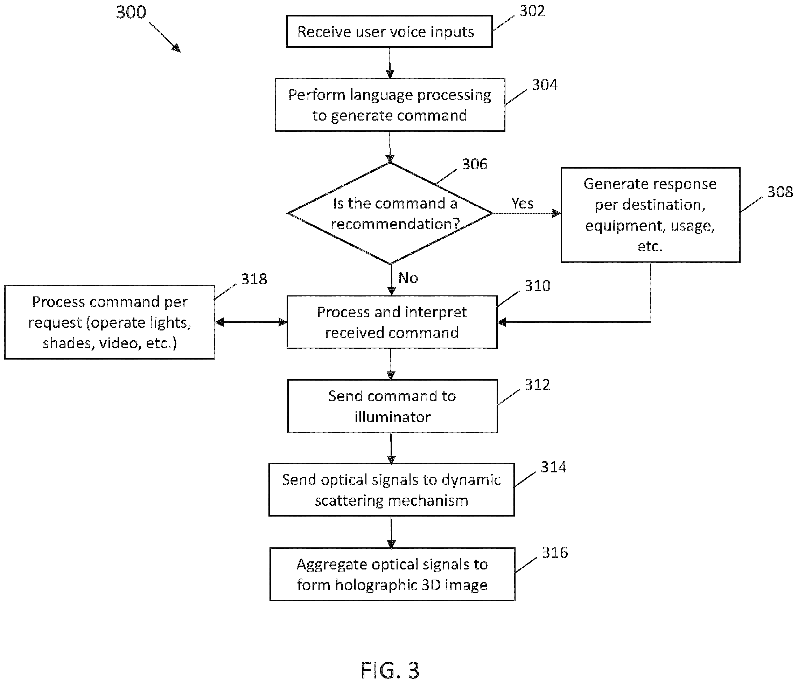

FIG. 3 illustrates a method 300 for operating the interactive digital assistant system according. In a Step 302, user voice inputs are received by the receiver 206 of the command reception module 202. In a Step 304, the received voice input is processed by the natural language module 208 to generate the user command. In a Step 306, the system determines the type of generated user command, for instance a question or a command to operate an equipment. If the generated user command is determined to be a question, a request for a recommendation, etc., at Step 308 the response module 210 generates a recommendation or answer responsive to the generated user command.

The method continues at Step 310 whereby the command processor 112a of the holographic display subsystem 112 processes and interprets the commands received from the command reception module 202. In a Step 312, the processed and interpreted commands are sent to the illuminator 112b of the holographic display subsystem 112. In a Step 314, the illuminator 112B sends the optical signals associated with the processed and interpreted commands to the dynamic scattering mechanism 112c. In a Step 316, the method concludes with the dynamic scattering mechanism 112c scattering and aggregating the optical signals to form the holographic 3D image to be displayed, with or without audio depending on the type of information to be displayed.

In a Step 318, if the processed and interpreted command is determined to be an instruction to operate and equipment (e.g., control lighting, temperature, window shade, video, etc.), the processed and interpreted command is communication to the cabin management system 218 which then operates to control the equipment. The equipment control can be performed with or without action by the holographic display subsystem 112 as described above.

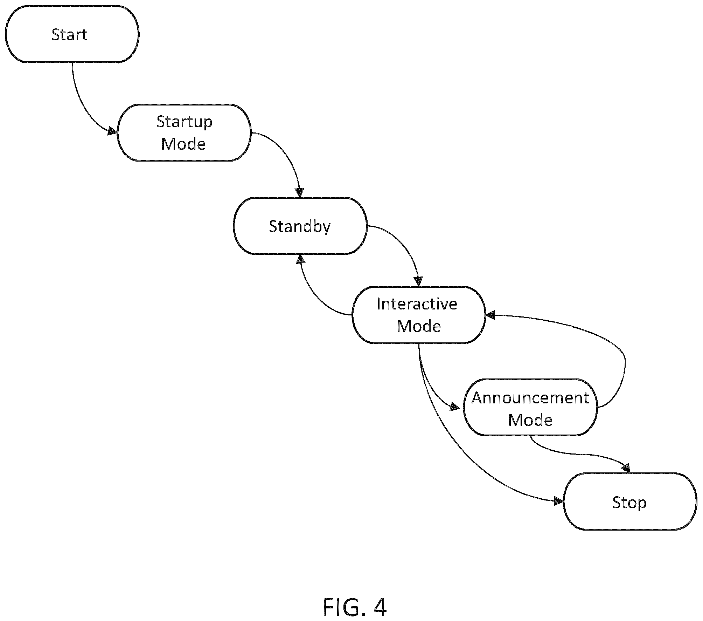

FIG. 4 illustrates various modes of operation of the interactive digital assistant according to the present disclosure. In startup mode, the holographic 3D image may be displayed to greet passengers arriving on the aircraft, and may introduce itself, explain the capabilities of the interactive digital assistant, ask questions to learn user preferences, etc. In standby mode, the interactive digital assistant awaits user inputs in the form of speech or keywords (e.g., `activate assistant'). In interactive mode, the interactive digital assistant is engaged in conversation with the user/passengers. In announcement mode, the interactive digital assistant apprises passengers of important messages such as safety measures, food/beverages menu, time to destination, etc.

From the above description, it is clear that the inventive concepts disclosed herein are well adapted to achieve the objectives and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. An interactive digital assistant system (200) for communicating information in an aircraft cabin, comprising:
a holographic display subsystem (112) including a hologram generator configured to project a hologram in a zone (102, 104, 106, 108) of an aircraft cabin (100);
a sensor subassembly (110) configured to sense a position of a receiver of information in the zone; and
a controller including a processor configured to:
receive, from the sensor subassembly, positional information pertaining to the receiver of information;
determine, based on the received positional information, a position of the receiver of information within the zone; and
operate, based on the determined position of the receiver of information within the zone, the holographic display subsystem to communicate information, by the hologram, to the receiver of information pertaining to the determined position of the receiver of information within the zone.

2. The system according to claim 1, wherein:
the zone includes equipment for usable by the receiver of information;
the determined position of the receiver of information is associated with the equipment; and
the information communicated to the receiver of information, by the hologram, includes instructional information pertaining to use of the equipment.

3. The system according to claim 2, wherein the controller is operably coupled to the equipment, and the processor is further configured to:
receive, from the receiver of information, a verbal command pertaining to an operation of the equipment;
process the received verbal command; and
operate the equipment to execute the processed verbal command.

4. The system according to claim 2 or 3, wherein the equipment comprises emergency equipment, and the information communicated to the receiver of information pertaining to the use of the equipment includes a tutorial, by the hologram, demonstrating use of the emergency equipment; and/or wherein the information communicated to the receiver of information, by the hologram, includes information pertaining to an existence of the equipment and physical location of the equipment within the zone.

5. The system according to claim 2, 3 or 4, wherein the equipment comprises at least one of an adjustable passenger seat, media equipment, lighting equipment, climatization equipment, and privacy equipment; and/or wherein the processor is further configured to, based on the determined position of the receiver of information in the zone, provide a tutorial of the equipment available for use in the zone.

6. The system according to claim 1, wherein the system further comprises at least one additional hologram generator configured to project a hologram in at least one additional zone of the aircraft cabin; and wherein:
the sensor subassembly is configured to sense a position of the receiver of information in the at least one additional zone; and
the processor is further configured to:
determine, based on the received positional information, the position of the receiver of information in the at least one additional zone; and
operate, based on the determined position of the receiver of information in the at least one additional zone, the at least one additional hologram generator to communicate information, by the hologram, to the receiver of information pertaining to the determined position of the receiver of information in the at least one additional zone.

7. The system according to claim 6, wherein the zone includes a passenger seating area and the at least one additional zone includes at least one of a galley, a lavatory, and a bedroom.

8. The system according to claim 6 or 7, wherein:
the at least one additional zone includes equipment usable by the receiver of information; and
the information communicated to the receiver of information, by the hologram generated by the at least additional hologram generator, includes instructional information pertaining to use of the equipment in the at least one additional zone.

9. The system according to claim 8, wherein the controller is operably coupled to the equipment in the at least one additional zone, and the processor is further configured to:
receive, from the receiver of information, a verbal command pertaining to an operation of the equipment in the at least one additional zone;
process the received verbal command; and
operate the equipment to execute the processed verbal command.

10. The system according to claim 8 or 9, wherein the information communicated to the receiver of information, by the hologram, further includes information pertaining to an existence of the equipment and physical location of the equipment in the at least one additional zone; and/or wherein the equipment comprises at least one of furniture, appliances, media equipment, lighting equipment, climatization equipment, and privacy equipment.

11. The system according to claim 8, 9 or 10, wherein the processor is further configured to, based on the determined position of the receiver of information in the at least one additional zone, provide a tutorial of the equipment available for use in the at least one additional zone.

12. A method for communicating with a receiver of information in an aircraft cabin, the aircraft cabin comprising a hologram generator, a sensor subassembly, and a controller including a processor, and the method comprising:
receiving, by the controller, an output from the sensor subassembly pertaining to a position of the receiver of information in a zone of the aircraft cabin;
determining, based on the received positional information, a position of the receiver of information within the zone and with respect to equipment within the zone; and
operating, based on the determined position of the receiver of information within the zone and with respect to the equipment within the zone, the hologram generator to communicate information, by the hologram, to the receiver of information pertaining to the equipment within the zone.

13. The method according to claim 12, wherein:
the equipment within the zone is usable by the receiver of information; and
the information communicated to the receiver of information, by the hologram, includes instructional information pertaining to use of the equipment; and optionally wherein the equipment comprises emergency equipment, and the information communicated to the receiver of information pertaining to the use of the equipment includes a tutorial, by the hologram, demonstrating use of the equipment.

14. The method according to claim 12 or 13, wherein the controller is operably coupled to the equipment, and the method further includes:
receiving, by the controller, a verbal command from the receiver of information pertaining to an operation of the equipment;
processing the received verbal command; and
operating the equipment to execute the processed verbal command.

15. The method according to claim 12, 13 or 14, wherein the information communicated to the receiver of information, by the hologram, further includes information pertaining to an existence of the equipment and physical location of the equipment within the zone; and/or wherein the equipment comprises at least one of an adjustable passenger seat, media equipment, lighting equipment, climatization equipment, privacy equipment, and an appliance.
